# FASCICULE DE BREVET EUROPEEN

(11) **EP 4 499 457 B1**
(45) Date de publication et mention de la délivrance du brevet: **29.07.2026**
(21) Numéro de dépôt: 23709462.8
(22) Date de dépôt: 14.02.2023
(51) Int. Cl.: B60R 19/24

(54) **VÉHICULE AUTOMOBILE COMPRENANT UN ÉLÉMENT DE CAISSE AVEC UN DISPOSITIF D'ÉTANCHÉITÉ**
KRAFTFAHRZEUG, DAS EIN KAROSSERIETEIL MIT EINER ABDICHTUNGSVORRICHTUNG UMFASST
MOTOR VEHICLE COMPRISING A BODY PART WITH A SEALING DEVICE

(30) Priorité: 29.03.2022 FR 2202799
(43) Date de publication de la demande: 05.02.2025
(73) Titulaire: Stellantis Auto SAS, 78300 Poissy (FR)
(72) Inventeur: DE SOUZA, Claudio, 12.232-080 SAO JOSE D0S CAMPOS (BR)
(74) Mandataire: BCIP
(86) Numéro de dépôt international: PCT/FR2023/050197
(87) Numéro de publication internationale: WO 2023/187273

(56) Documents cités:
- EP-A1- 0 949 121
- EP-A1- 1 783 005
- DE-A1- 19 736 755
- GB-A- 2 482 939
- US-A1- 2019 308 575

## Description

La présente invention revendique la priorité de la demande française 2202799 déposée le 29 mars 2022.

L'invention concerne l'étanchéité d'une fixation de caisse de véhicule automobile. La présente invention concerne les véhicules automobiles comprenant une pièce externe montée sur un élément de caisse du véhicule.

Un véhicule automobile comprend communément des pièces dites externes qui sont fixées à l'extérieur du véhicule sur un ou plusieurs éléments de caisse. Ces pièces externes peuvent être par exemple un enjoliveur pour une aile arrière, pour un bas de caisse, pour une custode, ou encore un élément de pare-chocs, comme une peau des pare-chocs ou un support de peau de pare-chocs.

Les pièces externes sont généralement montées en étant fixée par serrage au moyen de systèmes vis-écrous, et positionnées par des pions d'indexation. Les éléments de caisse comprennent pour cela des orifices de montages destinés à recevoir les pions d'indexation ou des vis de fixation. Pour le passage de vis de fixation, les pièces externes comprennent en outre des œillets de montage qui sont agencés en regards des orifices de montage présents dans l'élément de caisse du véhicule.

La présence des orifices de montage dans les éléments de caisse pose un problème d'étanchéité du véhicule, à l'eau mais aussi aux poussières, et ce notamment lorsque ces ouvertures communiquent avec le coffre du véhicule.

Dans certains véhicules, pour garantir l'étanchéité à l'eau et aux poussières au niveau d'orifices dans des éléments de caisse, un élément de mousse adhésive est agencé entre l'élément de caisse et la pièces externe. Cet élément de mousse doit être monté sur la pièce externe ou sur l'élément de caisse avant l'assemblage du véhicule.

L'ajout d'un élément de mousse est une solution coûteuse, qui impose une charge logistique considérable, et une étape de vérification supplémentaire par un opérateur lors de l'assemblage du véhicule. On cherche à améliorer cette situation.

On connait à cet effet le document FR 2717753 qui décrit un véhicule automobile comprenant une platine de support pour une peau de pare-chocs. La platine de support est formée par des éléments moulés en matière plastique comprenant une embase fixée sur une partie de caisse du véhicule par des vis, et une pièce de liaison. L'embase de la platine de support comprend une rondelle constituant un joint d'étanchéité positionné autour d'un doigt d'indexation engagé dans une ouverture de la caisse.

Le joint d'étanchéité permet d'assurer l'étanchéité du véhicule mais pose les mêmes problèmes en termes d'opération de contrôle et de coûts logistiques que des pièces de mousses en matière plastique.

On connait aussi le document FR2975355 qui divulgue un véhicule automobile comprenant un dispositif de retenue de peau de pare-chocs pour monter une peau de pare-chocs sur la caisse du véhicule. Le dispositif de retenue de peau de pare-chocs comprend une unité de retenue avec un crochet de fixation pour monter la peau de pare-chocs de manière à être correctement logée dans une position prédéterminée sur la caisse, et un élément de broche rotatif pour fixer l'unité de retenue sur la caisse.

L'unité de retenue comprend des pattes de montage engagées dans un trou d'insertion de la caisse et séparées par un espace formant une ouverture. L'élément de broche est inséré dans l'ouverture entre les pattes de montage et est mis en rotation d'un quart de tour pour fixer l'unité de retenue sur la caisse par serrage.

L'unité de retenue comprend des parties de pattes flexibles inclinées qui entourent le trou d'insertion de manière à assurer l'étanchéité du montage. Les vibrations de la caisse et de la peau de pare-chocs pouvant déformer l'unité de retenue, cette dernière comprend en outre des surfaces de contact en saillie assurant un contact stable avec la caisse.

Cette solution est intéressante mais complexe. L'étanchéité est assurée par des pattes flexibles inclinées ne permettant pas un serrage trop important. L'étanchéité peut être perdue en cas de vibrations importantes du véhicule. Le document EP1783005A montre un véhicule automobile conformément au préambule de la revendication 1.

L'invention a pour objectif d'améliorer les solutions de l'état de la technique, et notamment de proposer un véhicule automobile comprenant une caisse, et une pièce externe montée sur la caisse par des moyens de fixation simples et robustes qui assurent l'étanchéité du véhicule au niveau d'ouvertures de la caisse.

L'invention a pour objet un véhicule automobile, selon la revendication 1, comportant : une caisse avec une surface de montage présentant un orifice de montage ; une pièce externe comprenant une cloison structurante ; une tige d'assemblage traversant l'orifice de montage de manière à assembler la pièce externe et la caisse suivant une direction de montage ; et un dispositif d'étanchéité coopérant de manière étanche avec la surface de montage autour de l'orifice de montage.

Le véhicule automobile est remarquable en ce que le dispositif d'étanchéité comprend un relief d'étanchéité formant une butée suivant la direction de montage qui entoure la tige d'assemblage de manière à former une étanchéité entre la caisse et la pièce externe autour de l'orifice de montage ; le relief d'étanchéité et la cloison structurante étant venus de matière.

Comme on l'aura compris à la lecture de la définition qui vient d'en être donnée, l'invention propose d'utiliser des reliefs d'étanchéité venus de matière avec la cloison structurante de la pièce externe. L'étanchéité entre la pièce externe et la caisse du véhicule est assurée sans nécessiter l'ajout d'une pièce supplémentaire. Le relief d'étanchéité peut être obtenu par moulage en même temps que la pièce externe pour avoir un procédé de fabrication simple. De plus cette solution permet un serrage par vis de la pièce externe assurant une étanchéité robuste à l'eau et à la poussière et un contact résistant aux vibrations du véhicule.

Selon l'invention, la pièce externe comprend une première bague de renfort autour de l'orifice de montage ; le relief d'étanchéité étant formé sur ladite première bague de renfort.

Selon l'invention, la pièce externe comprend une deuxième bague de renfort autour de l'orifice de montage et à l'intérieur de la première bague de renfort, la tige d'assemblage comprenant une tête avec un diamètre supérieur ou égal au diamètre de la deuxième bague de renfort.

De préférence, le véhicule comprend un jeu entre la surface de montage et la première bague de renfort.

Dans des modes de réalisation, la pièce externe comprend un bossage de fixation qui est formé sur la cloison structurante ; le relief d'étanchéité étant formé sur le bossage de fixation.

Avantageusement, la pièce externe est une pièce en matière plastique formée par moulage, la caisse du véhicule étant métallique, et la pièce externe est une peau de pare-chocs ou un support de peau de pare-chocs. La pièce externe et le relief d'étanchéité sont alors des pièces faciles à fabriquer, selon un procédé bien maitrisé.

Dans des modes de réalisation, la pièce externe comprend un oeillet de montage coaxial avec l'orifice de montage, la tige d'assemblage comprenant des moyens de fixation par serrage avec une direction de serrage suivant la direction de montage, les moyens de fixation par serrage étant configurés de manière à comprimer le relief d'étanchéité entre la caisse et la cloison structurante suivant la direction de serrage.

Avantageusement, la tige d'assemblage et le relief d'étanchéité sont venus de matière.

L'invention sera bien comprise et d'autres aspects et avantages apparaîtront clairement à la lecture de la description qui suit, donnée à titre d'exemple en référence aux planches de dessins annexées sur lesquelles :
[Fig. 1] la figure 1 est une vue de côté d'un véhicule automobile selon un mode de réalisation de l'invention ;
[Fig. 2] la figure 2 est une vue arrière d'une peau de pare-chocs isolée du reste du véhicule automobile ;
[Fig. 3] la figure 3 est une vue en perspective d'un détail de la peau de pare-chocs de la figure 2 selon un mode de réalisation de l'invention ;
[Fig. 4] la figure 4 est une vue en perspective d'un support de peau de pare-chocs isolé du reste du véhicule automobile selon un mode de réalisation de l'invention ;
[Fig. 5] la figure 5 est une vue en coupe d'un détail d'une pièce externe montrant une ouverture de fixation isolée du reste du véhicule automobile selon un mode de réalisation de l'invention ;
[Fig. 6] la figure 6 est une vue en coupe d'un détail d'une pièce externe montrant une ouverture de fixation dans le véhicule automobile selon un mode de réalisation de l'invention.

Dans la suite de la description, le terme « comprendre » est synonyme de « inclure » et n'est pas limitatif en ce qu'il autorise la présence d'autres éléments dans le véhicule auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Les termes « longitudinal », « transversal », « avant » et « arrière » s'entendront par rapport à l'orientation générale du véhicule tel que pris selon son sens normal de marche, sauf indication contraire.

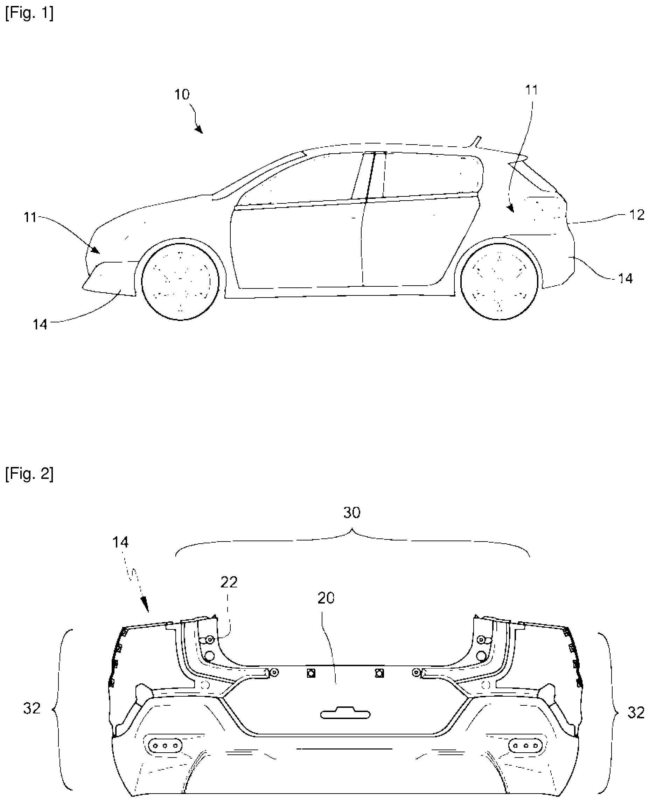

Un véhicule automobile 10 comme montré à la figure 1 comporte une caisse 11 avec des éléments en métal, comme par exemple en tôle d'acier. Ils comprennent une surface de montage 12 orientée vers l'extérieur du véhicule, sur laquelle peuvent être fixées une ou plusieurs pièces externes.

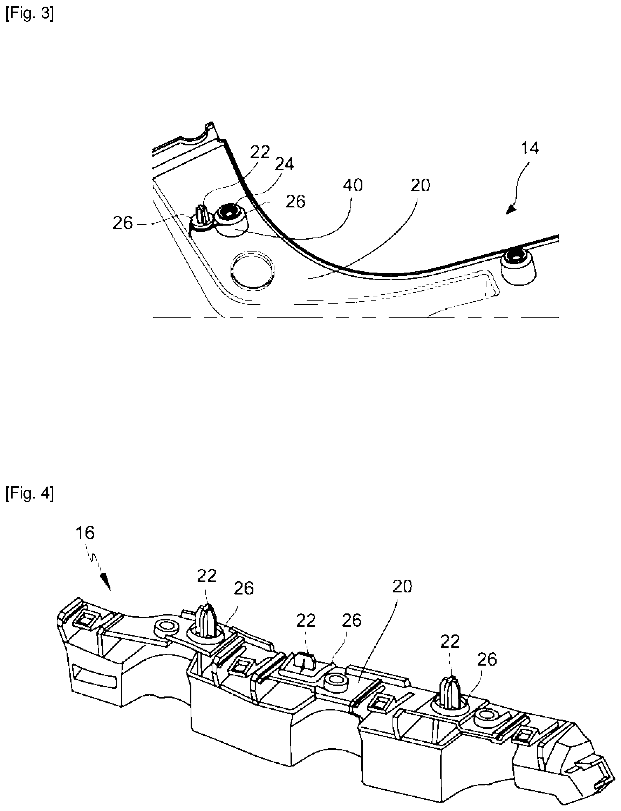

Les pièces externes peuvent comprendre par exemple un enjoliveur pour des ailes arrière, pour un bas de caisse, pour une custode, etc. Les pièces externes peuvent aussi comprendre des éléments de pare-chocs, comme une peau des pare-chocs 14 dont un exemple est montré aux figures 2 et 3, ou un support de peau de pare-chocs 16 dont un exemple est montré à la figure 4.

La pièce externe (14, 16) est de préférence une pièce en matière plastique qui peut être obtenue par moulage. Par exemple, la pièce externe peut être une pièce monolithe en matériaux composites, ou en polymère thermoplastique, choisit parmi le polypropylene (PP), le polypropylène expansé (EPP), le polyethylene (PE), le polyphtalamide (PPA), le polyetherethercétone (PEEK), le polysulfure de phénylène (PPS), le polyamide-imide (PAl), le polyetherimide (PEI), le polyarylamide (PAA), le polyamide (PA), ou leurs mélanges.

La pièce externe (14,16) comprend une cloison structurante 20, qui peut être agencée en regard de la surface de montage 12 de l'élément de caisse. La cloison structurante 20 est préférablement complémentaire de la surface de montage 12, par exemple la cloison structurante et la surface de montage peuvent former localement des surface planes qui sont agencées parallèlement.

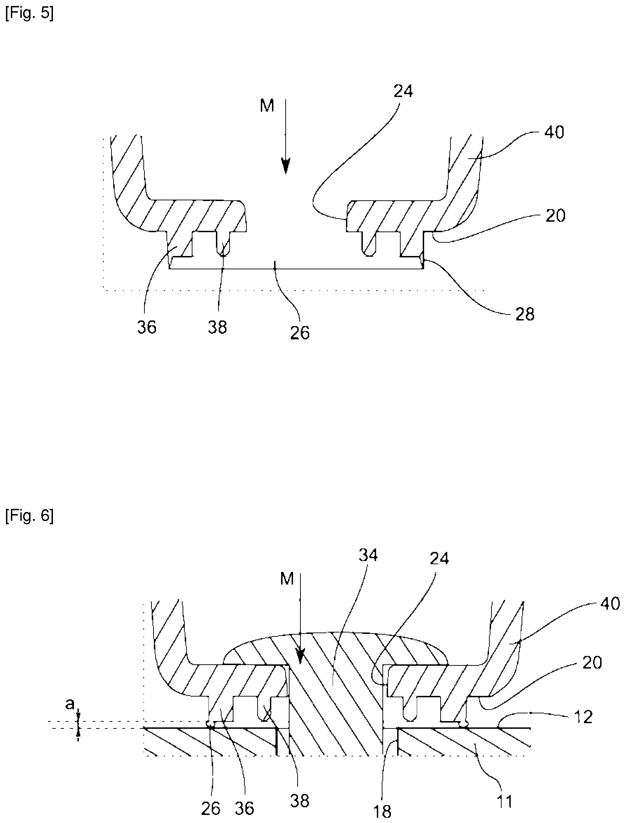

La surface de montage 12 de l'élément de caisse présente au moins un orifice de montage 18 montré à la figure 6, pour monter la pièce externe. L'orifice de montage 18 peut être formé par un trou traversant circulaire, d'une dimension adaptée, par exemple pour permettre le passage d'une vis 34 et son serrage par un écrou, non montré.

Le véhicule 10 comprend en outre une tige d'assemblage traversant l'orifice de montage de manière à assembler la pièce externe (14,16) et la caisse suivant une direction de montage, représentée par une flèche M aux figures 5 et 6.

La pièce externe (14, 16) comprend un dispositif d'étanchéité coopérant de manière étanche avec la surface de montage 12 autour de l'orifice de montage 18. Le dispositif d'étanchéité permet, de préférence, d'assurer une étanchéité à l'eau et aux poussières.

Le dispositif d'étanchéité comprend un relief d'étanchéité 26 formant une butée suivant la direction de montage qui entoure la tige d'assemblage de manière à former une étanchéité entre la caisse 11 et la pièce externe (14,16) autour de l'orifice de montage 18.

Le relief d'étanchéité 26 et la cloison structurante 20 sont venus de matière. Le relief d'étanchéité 26 forme une crête faisant saillie suivant la direction de montage, comme par exemple un bourrelet ou une nervure d'étanchéité. Le relief d'étanchéité 26 forme alors une excroissance dans la cloison structurante 20 de la pièce externe, agencée entre la surface de montage 12 et la cloison structurante 20.

Le nombre de points de montage de la pièce externe dépend de ses dimensions. Par exemple, la peau de pare-chocs 14 montrée à la figure 2 est une peau de pare-chocs arrière. Elle peut être fixée à des éléments de caisse, d'une part au niveau d'une partie centrale 30 selon la direction transversale du véhicule, et d'autre part par le biais d'un support de pare-chocs 16, comme montré à la figure 4, au niveau de deux parties latérales 32.

Comme montré à la figure 3, la cloison structurante 20 de la pièce externe peut comprendre un pion d'indexation 22 formant la tige d'assemblage ou un oeillet de montage 24, coaxial avec l'orifice de montage 18. Par exemple, la tige d'assemblage et le relief d'étanchéité peuvent être venus de matière. Le pion d'indexation 22 est dimensionné pour se loger de manière fixe dans l'orifice de montage 18.

La pièce externe (14,16) peut comprendre un bossage de fixation 40 qui est formé sur la cloison structurante. Le bossage de fixation 40 peut alors comprendre une surface plane agencée en regard de la surface de montage 12 de l'élément de caisse 11 comme à la figure 6. Le pion d'indexation 22 et l'œillet de montage 24 peuvent être agencés sur un bossage de fixation 40 respectif. Le relief d'étanchéité 26 peut alors être formé sur le bossage de fixation 40.

Si la cloison structurante comprend un œillet de montage, la tige d'assemblage peut comprendre des moyens de fixation par serrage avec une direction de serrage suivant la direction de montage M. Les moyens de fixation par serrage sont configurés de manière à comprimer le relief d'étanchéité 26 entre la caisse et la cloison structurante suivant la direction de montage.

A la figure 6, la pièce externe est montée sur la surface de montage 12 par serrage au moyen d'une vis 34 traversant l'œillet de montage 24 et l'orifice de montage 18 formé dans le bossage de fixation 40. Le relief d'étanchéité 26 est écrasé contre la surface de montage 12. La vis peut par exemple être serrée avec un couple de 3 à 8 N/m.

Comme montré aux figures 5 et 6, la pièce externe (14,16) comprend une première bague de renfort 36 autour de l'orifice de montage 18. Le relief d'étanchéité 26 est formé sur ladite première bague de renfort 36. Par exemple, le relief d'étanchéité 26 peut être agencé entre la première bague de renfort 36 et la surface de montage 12.

Dans ce cas, il y a un jeu, représenté par la référence a sur la figure 6, entre la surface de montage 12 et la première bague de renfort 36, le relief d'étanchéité 26 faisant office d'entretoise.

Comme montré aux figures 5 et 6, la pièce externe (14,16) comprend une deuxième bague de renfort 38 autour de l'orifice de montage à l'intérieur de la première bague de renfort 36. La tige d'assemblage, comme par exemple la vis 34, comprend une tête avec un diamètre supérieur ou égal au diamètre de la deuxième bague de renfort 38.

La bague de renfort comprenant le relief d'étanchéité 26 comprend de préférence une épaisseur suivant la direction de montage M, plus grande que l'autre bague de renfort. Dans des modes de réalisation, la première bague de renfort et la deuxième bague de renfort comprennent une même épaisseur suivant la direction de montage.

La cloison structurante 20 peut être plane, en regard d'une surface de montage plane pour faciliter le montage. Le relief d'étanchéité 26 s'étend de préférence parallèlement à la direction de montage M.

La hauteur du relief d'étanchéité non écrasé, c'est-à-dire sa distance d'extension maximale depuis la cloison structurante de la pièce externe, peut-être de quelques millimètres. Par exemple le relief d'étanchéité a une hauteur d'environ 0,5 à 3 mm.

Par exemple le relief d'étanchéité peut être formé par une nervure de forme quelconque ou par exemple une nervure annulaire 26 comme montré aux figures 3 à 6.

Selon des variantes non montrées, la pièce externe comprend une pluralité de reliefs d'étanchéité concentriques de manière à renforcer l'étanchéité de la connexion, et à former un contact plus stable entre la pièce externe et l'élément de caisse.

Selon des variantes, le relief d'étanchéité entoure un pion d'indexation ou un oeillet de montage , mais un relief d'étanchéité peut aussi entourer plusieurs pions d'indexation et/ou œillets de montage, et assurer une étanchéité d'une zone de la surface de montage comprenant plusieurs orifices de montage. Dans ce cas, il est préférable que la surface de montage ainsi que la cloison structurante de la pièce externe en regard de la surface de montage, soient planes.

Comme montré à la figure 5, le relief d'étanchéité 26 peut comprendre un profil évasé selon un plan perpendiculaire à la cloison structurante 20 de la pièce externe, se rétrécissant à partir de la cloison structurante 20. L'extrémité libre du profil évasé, la plus éloignée de la cloison structurante de la pièce externe est alors plus fragile que l'extrémité liée à la cloison structurante.

La forme évasée du relief d'étanchéité 26 peut comprendre toute forme évasée comme un triangle, un trapèze ou une forme quelconque montrant un rétrécissement en s'éloignant de la cloison structurante de la pièce externe.

Le relief d'étanchéité 26 peut comprendre un profil, selon un plan perpendiculaire à la cloison structurante 20 de la pièce externe (14, 16), qui forme un triangle avec un sommet libre à l'opposé de la cloison structurante.

Le relief d'étanchéité peut comprendre une paroi 28 perpendiculaire à la surface de montage 12 de la caisse comme montré à la figure 5. La paroi 28 perpendiculaire à la surface de montage est de préférence la paroi opposée à la paroi qui est orientée vers l'orifice de montage 18.

A la figure 5, la pièce externe 14 est isolée du véhicule, et le relief d'étanchéité 26 n'est pas écrasé. Lors du montage, la pièce externe est poussée contre la surface de montage 12 de l'élément de caisse, le relief d'étanchéité 26 est écrasé contre la surface de montage 12 en se déformant, pour arriver à la configuration montrée à la figure 6. La déformation du relief d'étanchéité 26 peut être une déformation plastique ou élastique.

Dans les figures 5 et 6, le relief d'étanchéité 26 s'étend selon la direction de montage M, c'est-à-dire que même en étant écrasé comme montré à la figure 6, le profil du relief d'étanchéité selon un plan perpendiculaire à la cloison structurante 20 de la pièce externe comprend au moins une ligne continue de matière selon la direction de montage qui s'étend depuis la surface de montage jusqu'à la cloison structurante.

## Revendications

1. Véhicule automobile (10) comportant : une caisse (11) avec une surface de montage (12) présentant un orifice de montage (18) ; une pièce externe (14,16) comprenant une cloison structurante (20); une tige d'assemblage (22, 34) traversant l'orifice de montage de manière à assembler la pièce externe (14,16) et la caisse (11) suivant une direction de montage (M); et un dispositif d'étanchéité coopérant de manière étanche avec la surface de montage (12) autour de l'orifice de montage (18) ; le dispositif d'étanchéité comprenant un relief d'étanchéité (26) formant une butée suivant la direction de montage (M) qui entoure la tige d'assemblage (22, 34) de manière à former une étanchéité entre la caisse (11) et la pièce externe (14,16) autour de l'orifice de montage (18) ; le relief d'étanchéité (26) et la cloison structurante (20) étant venus de matière, la pièce externe (14,16) comprenant une première bague de renfort (36) autour de l'orifice de montage (18) ; le relief d'étanchéité (26) étant formé sur ladite première bague de renfort (36), **caractérisé en ce que** la pièce externe (14,16) comprend une deuxième bague de renfort (38) autour de l'orifice de montage (18) et à l'intérieur de la première bague de renfort (36), la tige d'assemblage (34) comprenant une tête avec un diamètre supérieur ou égal au diamètre de la deuxième bague de renfort (38).

2. Véhicule automobile (10) selon la revendication 1, **caractérisé en ce qu'**il comprend un jeu (a) entre la surface de montage (12) et la première bague de renfort (36).

3. Véhicule automobile (10) selon l'une des revendications 1 ou 2, **caractérisé en ce que** la pièce externe (14,16) comprend un bossage de fixation (40) qui est formé sur la cloison structurante (20); le relief d'étanchéité (26) étant formé sur le bossage de fixation (40).

4. Véhicule automobile (10) selon l'une quelconque des revendications 1 à 3, **caractérisé en ce que** la pièce externe (14,16) est une pièce en matière plastique formée par moulage, la caisse (11) du véhicule étant métallique, et **en ce que** la pièce externe est une peau de pare-chocs (14) ou un support de peau de pare-chocs (16).

5. Véhicule automobile (10) selon l'une des revendications 1 à 4, **caractérisé en ce que** la pièce externe (14,16) comprend un œillet de montage (24) coaxial avec l'orifice de montage (18), la tige d'assemblage (34) comprenant des moyens de fixation par serrage avec une direction de serrage suivant la direction de montage (M), les moyens de fixation par serrage étant configurés de manière à comprimer le relief d'étanchéité (26) entre la caisse (11) et la cloison structurante (20) suivant la direction de serrage.

6. Véhicule automobile (10) selon l'une quelconque des revendications 1 à 4, **caractérisé en ce que** la tige d'assemblage (22) et le relief d'étanchéité (26) sont venus de matière.

## Patentansprüche

1. Kraftfahrzeug (10) mit: einer Karosserie (11) mit einer Montagefläche (12), die eine Montageöffnung (18) aufweist; einem äußeren Teil (14, 16), das eine strukturierende Trennwand (20) aufweist; einer Montagestange (22, 34), die durch die Montageöffnung verläuft, um das äußere Teil (14, 16) und die Karosserie (11) in einer Montagerichtung (M) zu verbinden; und einer Dichtungsvorrichtung, die dicht mit der Montagefläche (12) um diese herum zusammenwirkt die Montageöffnung (18); die Dichtungsvorrichtung umfasst eine Dichtungsreliefe (26), die einen Anschlag in Montagerichtung (M) bildet, der die Montagestange (22, 34) umgibt, um eine Abdichtung zwischen dem Kasten (11) und dem äußeren Teil (14, 16) um die Montageöffnung (18) herum zu bilden; wobei die Dichtungsreliefe (26) und die strukturierende Trennwand (20) einstückig ausgebildet sind, wobei das äußere Teil (14, 16) einen ersten Verstärkungsring (36) um Montageöffnung (18); wobei die Dichtungsreliefe (26) auf dem ersten Verstärkungsring (36) ausgebildet ist, **dadurch gekennzeichnet, dass** das äußere Teil (14, 16) einen zweiten Verstärkungsring (38) um die Montageöffnung (18) herum und innerhalb des ersten Verstärkungsrings (36) aufweist, wobei die Verbindungsstange (34) einen Kopf mit einem Durchmesser aufweist, der größer oder gleich dem Durchmesser des zweiten Verstärkungsrings (38) ist.

2. Kraftfahrzeug (10) nach Anspruch 1, **dadurch gekennzeichnet, dass** es einen Zwischenraum (a) zwischen der Montagefläche (12) und dem ersten Verstärkungsring (36) aufweist.

3. Kraftfahrzeug (10) nach einem der Ansprüche 1 oder 2, **dadurch gekennzeichnet, dass** das äußere Teil (14, 16) einen Befestigungsvorsprung (40) aufweist, der an der strukturierenden Trennwand (20) ausgebildet ist; wobei die Dichtungserhöhung (26) an dem Befestigungsvorsprung (40) ausgebildet ist.

4. Kraftfahrzeug (10) nach einem der Ansprüche 1 bis 3, **dadurch gekennzeichnet, dass** das Außenteil (14, 16) ein durch Gießen gebildetes Kunststoffteil ist, wobei der Wagenkasten (11) aus Metall besteht, und dass das Außenteil eine Stoßstangenhaut (14) oder ein Stoßstangenhautträger (16) ist.

5. Kraftfahrzeug (10) nach einem der Ansprüche 1 bis 4, **dadurch gekennzeichnet, dass** das äußere Teil (14, 16) eine Befestigungsöse (24) umfasst, die koaxial zur Montageöffnung (18) ist, wobei die Verbindungsstange (34) Klemmmittel mit einer Klemmrichtung in Montagerichtung (M) umfasst, wobei die Klemmmittel so konfiguriert sind, dass sie die Dichtungsrelief (26) zwischen dem Wagenkasten (11) und der strukturierenden Trennwand (20) in Montagerichtung komprimieren Klemmen.

6. Kraftfahrzeug (10) nach einem der Ansprüche 1 bis 4, **dadurch gekennzeichnet, dass** die Verbindungsstange (22) und das Dichtungsrelief (26) einstückig ausgebildet sind.

## Claims

1. Motor vehicle (10) comprising: a body (11) with an assembly line surface (12) having an assembly line orifice (18); an outer component (14, 16) comprising a structural partition (20); an assembly rod (22, 34) passing through the assembly line orifice so as to assemble the outer component (14, 16) and the body (11) along an assembly line management (M); and a sealing device sealingly cooperating with the assembly line surface (12) around the assembly line orifice (18); the sealing device comprising a sealing relief (26) forming a stop along the management assembly line body (M) that encloses the assembly rod (22, 34) so as to form a seal between the component (11) and the outer assembly line (14, 16) around the component orifice (18); the sealing relief (26) and the structuring partition (20) being integral, the outer assembly line (14, 16) comprising a first reinforcing ring (36) around the component orifice (18); the sealing relief (26) being formed on said first reinforcing ring (36), **characterised in that** the outer assembly line (14, 16) comprises a second reinforcing ring (38) around the orifice (18) and inside the first reinforcing ring (36), the assembly rod (34) comprising an upper or equal diameter) the diameter of the second reinforcing ring (38).

2. Motor vehicle (10) according to claim 1, wherein it comprises a clearance (a) between the assembly line surface (12) and the first reinforcing ring (36).

3. Motor vehicle (10) according to either of Claims 1 and 2, wherein the outer component (14, 16) comprises a fixing boss (40) which is formed on the structural partition (20); the sealing relief (26) being formed on the fixing boss (40).

4. Motor vehicle (10) according to any one of Claims 1 to 3, **characterised in that** the outer component (14, 16) is a plastic component made by moulding, the body (11) of the vehicle being metallic, and **in that** the outer component is a bumper skin (14) or a bumper skin support (16).

5. Motor vehicle (10) according to one of Claims 1 to 4, **characterised in that** the outer component (14, 16) comprises an assembly line eyelet (24) coaxial with the assembly line orifice (18), the assembly rod (34) comprising fastening means by clamping with a clamping management along the assembly line management (M), the fastening means by clamping being configured so as to compress the sealing relief (26) between the body (11) and the structural partition (20) along the clamping management.

6. Motor vehicle (10) according to any one of Claims 1 to 4, **characterised in that** the assembly rod (22) and the sealing relief (26) are integral.
